(19) Europäisches Patentamt
European Patent Office
Office européen des brevets

(11) **EP 2 972 601 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **14718311.5**

(22) Anmeldetag: **13.03.2014**

(51) Int Cl.:
***B60T 8/88*** *(2006.01)* ***G06F 11/20*** *(2006.01)*
***G05B 9/03*** *(2006.01)*

(86) Internationale Anmeldenummer:
**PCT/AT2014/050061**

(87) Internationale Veröffentlichungsnummer:
**WO 2014/138764 (18.09.2014 Gazette 2014/38)**

(54) **VERFAHREN ZUR RISIKOABGRENZUNG VON FEHLERN IN EINEM REDUNDANTEN SICHERHEITSRELEVANTEN STEUERUNGSSYSTEM FÜR EIN KRAFTFAHRZEUG**

METHOD FOR LIMITING THE RISK OF ERRORS IN A REDUNDANT, SAFETY-RELATED CONTROL SYSTEM FOR A MOTOR VEHICLE

PROCÉDÉ DE LIMITATION DES RISQUES D'ERREURS DANS UN SYSTEME DE COMMANDE RELATIF À LA SÉCURITÉ REDONDANT POUR UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2013 AT 1982013**
**17.09.2013 AT 505922013**

(43) Veröffentlichungstag der Anmeldung:
**20.01.2016 Patentblatt 2016/03**

(73) Patentinhaber: **TTTech Auto AG**
**1040 Wien (AT)**

(72) Erfinder: **KOPETZ, Hermann**
**A-2500 Baden (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A- 0 496 509      DE-A1- 10 015 225**
**DE-A1- 10 155 119      DE-A1-102007 060 036**
**DE-A1-102009 029 151      US-A1- 2003 055 550**
**US-B1- 6 317 675**

**Beschreibung**

Die Erfindung betrifft ein Verfahren und eine Vorrichtung zur Risikobegrenzung von Fehlern in einem Steuerungssystem, insbesondere einem sicherheitsrelevanten Steuerungssystem.

Weiters betrifft die Erfindung ein Verfahren und eine Vorrichtung zur Risikobegrenzung von Fehlern in einem *Autonomie Emergency Braking* (AEB) System eines Fahrzeugs.

Außerdem betrifft die Erfindung ein Steuerungssystem, insbesondere sicherheitsrelevantes Steuerungssystem, z.B. *Autonomie Emergency Braking* (AEB) System eines Fahrzeugs, mit einer solchen Vorrichtung.

Schließlich betrifft die Erfindung noch ein Kraftfahrzeug mit zumindest einem solchen Steuerungssystem.

Die US 6 317 675 B1 beschreibt ein Verfahren zur Risikobegrenzung in einem sicherheitsrelevanten Steuerungssystem.

Die vorliegende Erfindung liegt im Bereich der Steuerung von *Cyber-Physikalischen Systemen* (CPS). Sie beschreibt ein innovatives Verfahren, wie durch die Anwendung von *diversitärer Redundanz* die Folgen von Software- und Hardwarefehlern abgeschwächt werden können.

Die technischen Entwicklungen auf dem Gebiet der Mikroelektronik ermöglichen den kostengünstigen Bau von autonomen technischen Systemen. In einem autonomen technischen System, bestehend aus einer technischen Anlage, dem zu *steuernden Objekt* (*physical system*-PS) und einem das Objekt steuernden Computersystem (*cyber system*-CS) beobachtet das CS mit einem Sensorsystem das Verhalten des PS und errechnet autonom geeignete *Stellwerte* für das Aktuatorensystem des zu steuernden Objekts.

Aus der Sicht der Informationsverarbeitung führt das zyklisch arbeitende CS eine *gigantische Datenreduktion* durch. Ein bildgebendes Sensorsystem erfasst über Kameras oder andere Sensoren (z.B. Radar oder Laser) in jedem Zyklus Megabits von Daten und reduziert diese Daten auf die Vorgaben für einen oder einige wenige Stellwerte, wobei eine solche Vorgabe in einem zehn Bit Datenfeld ausgedrückt werden kann.

Die Algorithmen und damit die Software der Bildverarbeitung, die ein Bild analysieren und daraus die geeigneten Stellwerte errechnen, sind sehr umfangreich. Da sich diese Bildverarbeitungssoftware aufgrund ihres Umfangs nicht vollständig testen lässt [3], ist es wahrscheinlich, dass sich in der Software unerkannte Entwurfsfehler befinden, die unter gewissen Bedingungen zu falschen Resultaten führen. Ein Fehler im CS - sei es ein Fehler im Algorithmus, in der Programmierung oder ein Hardwarefehler - führt zu einem Fehler in einem oder wenigen eines zehn Bit breiten Stellwerts.

Es ist eine Aufgabe der vorliegenden Erfindung, eine Begrenzung der Auswirkungen eines Fehlers in einem solchen CS zu ermöglichen.

Diese Aufgabe wird mit einem eingangs erwähnten Verfahren und bzw. einer eingangs erwähnte Vorrichtung zur Risikobegrenzung von Fehlern in einem Steuerungssystem dadurch gelöst, dass erfindungsgemäß, eine, vorzugsweise intelligente, *Aktuatorsteuerung* (*AST*) aus den von zwei unabhängigen Fault-Containment-Units (FCU) mittels *diversitärer Redundanz* ermittelten zwei Stellwerten durch die Anwendung eines *gewichteten Mittelwertalgorithmus* einen neuen Stellwert errechnet, der trotz des Auftretens eines Fehlers in einer der beiden FCUs bewirkt, dass ein mit dem Steuerungssystem zu steuerndes Objekt, vorzugsweise *schnell,* in einen sicheren Zustand geführt wird, und wobei die Aktuatorsteuerung auf einer self-checking Hardware ausgeführt wird.

Diese Aufgabe wird weiters mit einem eingangs Verfahren bzw. einer eingangs erwähnten Vorrichtung zur Risikobegrenzung von Fehlern in einem *Autonomie Emergency Braking* (AEB) System eines Fahrzeugs dadurch gelöst, dass erfindungsgemäß eine, vorzugsweise intelligente, *Aktuatorsteuerung (AST)* aus den von zwei unabhängigen Fault-Containment-Units (FCU) mittels *diversitärer Redundanz* ermittelten zwei Stellwerten für die Bremskraft durch die Anwendung eines *gewichteten Mittelwertalgorithmus,* der den Stellwert jener FCU, die eine höhere Bremskraft vorgibt, um ein vorgegebenes Gewicht g stärker gewichtet als den Stellwert jener FCU, die eine geringere Bremskraft vorgibt, einen neuen Stellwert für die Bremskraft errechnet und diesen neuen Stellwert für die Bremskraft in dem Fahrzeug zur Anwendung bringt, und wobei die Aktuatorsteuerung auf einer self-checking Hardware ausgeführt wird.

Die Dokumente DE 100 15 255 A1, DE 10 2007 060036 A1 und DE 101 55 119 A1 beschreiben die Verwendung eines gewichteten Mittelwertalgorithmus, um eine Steuerung sicherer zu machen.

Erfindungsgemäß wird vorgeschlagen, zwei unabhängige diversitäre Systeme zur Auswertung der Sensordaten vorzusehen.

Zwei Computersysteme sind *diversitär,* wenn sie unterschiedliche Hardware und/oder unterschiedliche Algorithmen zur Berechnung der Resultate verwenden. Wenn beide diversitären Systeme ausreichend getestet worden sind, ist es unwahrscheinlich, dass ein Satz von Eingabedaten *gleichzeitig* einen Fehler in beiden diversitären Systemen hervorruft.

Die beiden diversitären Systeme errechnen parallel jeweils einen Stellwert für einen Aktuator. Im Normalfall, wenn kein Fehler vorliegt, sind die beiden Stellwerte identisch. Liegt ein Fehler vor, so unterscheiden sich die beiden Stellwerte, wobei nicht entschieden werden kann, welcher der beiden Stellwerte fehlerhaft ist. Erfindungsgemäß wird vorgeschlagen, im Falle der Abweichung der beiden Stellwerte durch einen *gewichteten Mittelwertagorithmus* aus den beiden vorliegenden Stellwerten einen neuen Stellwert zu ermitteln, der durch die geeignete Auswahl der Gewichtung jenen Stellwert bevorzugt, der schnell zu einem sicheren Zustand des PS führt.

Dadurch, dass erfindungsgemäß die Aktuatorsteuerung auf einer self-checking Hardware ausgeführt wird, kann ein Hardwarefehler der Aktuatorsteuerung sofort erkannt werden.

In der veröffentlichen Patentliteratur wurde die US Patentanmeldung [1] gefunden, die sich mit der Modellierung der Folgen eines Fehlers befasst, um diese Folgen abschwächen zu können.

Bevorzugte Ausführungsformen der erfindungsgemäßen Vorrichtungen und der erfindungsgemäßen Verfahren, welche für sich alleine oder in beliebiger Kombination miteinander realisiert sein können, sind im Folgenden beschrieben:

➢ der im gegenwärtigen Zyklus ermittelte Stellwert durch die Bildung eines *weiteren gewichteten Mittelwerts* aus dem Stellwert des vergangenen Zyklus und dem ermittelten Stellwert im gegenwärtigen Zyklus wird derart korrigiert, dass die Gewichtung des Stellwerts im vergangenen Zyklus zunimmt, wenn die Differenz zwischen den beiden im gegenwärtigen Zyklus berechneten Stellwerten zunimmt;

➢ die, vorzugsweise intelligente, Aktuatorsteuerung legt bei dem Auftreten von ungleichen Stellwerten eine Fehlermeldung in einem Diagnosespeicher ab.

Die vorliegende Erfindung legt ein Verfahren offen, wie durch *diversitäre Redundanz* in einem *Cyber-Physikalischen System* (CPS) die Auswirkungen von Fehlern in einem Computersystem auf das Verhalten einer technischen Anlage (zu steuernde Objekt, physikalisches System) begrenzt werden können. Das Verfahren sieht vor, zwei unabhängige *diversitäre Computersysteme* zur Auswertung der Sensordaten und Berechnung der Stellwerte zu verwenden. Wenn sich aufgrund eines Fehlers die beiden Stellwerte unterscheiden, so wird über einen gewichteten Mittelwertalgorithmus aus den beiden vorliegenden Stellwerten ein neuer Stellwert errechnet, der durch die Auswahl der Gewichtung jenen Stellwert bevorzugt, der die Anlage schnell in eine sicheren Zustand führt.

Das erfindungsgemäße Verfahren wird am Beispiel eines *Autonomen Bremssystems* in einem Fahrzeug an Hand der Zeichnung im Folgenden erörtert. In dieser zeigt die einzige

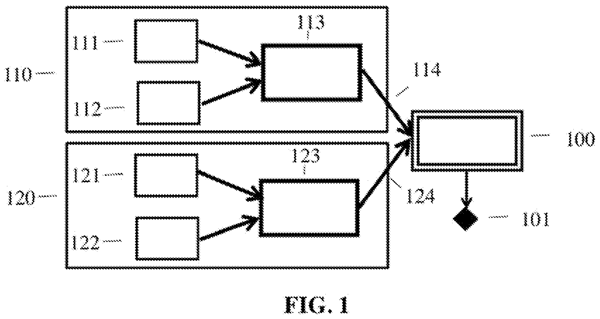

Fig. 1    die Struktur eines erfindungsgemäßen redundanten Steuerungssystems,

Das folgende konkrete Beispiel eines autonomen Bremssystems in einem Fahrzeug zeigt eine der vielen möglichen Realisierungen des erfindungsgemäßen Verfahrens.

Im Juni 2012 hat die NCAP (European New Car Assessment Program) Organisation eine Roadmap [4] veröffentlicht, aus der hervorgeht, dass im Jahr 2016 Autonomous Emergency Braking (AEB) Systeme in neuen Kraftfahrzeugen auf breiter Front eingeführt werden sollen. Mit der vorliegenden Erfindung lassen sich die Zuverlässigkeit und Sicherheit von autonomen Bremssystemen verbessern.

Die wesentliche Idee der vorliegenden Erfindung - in Bezug auf AEB Systeme - besteht darin, die die Umgebung beobachtenden Sensoren und die zur Auswertung erforderliche Elektronik auf zwei *autarke Fault-Containment Units (FCU)* aufzuteilen [2] und die von den beiden unabhängigen FCUs ermittelten Stellwerte derart zu fusionieren, dass das Fahrzeug auch bei Auftreten eines Fehlers in einer FCU schnell in einen sicheren Zustand gebracht werden kann. Unter einer *FCU* wird ein abgekapseltes Sensor/Hardware/Software Subsystem verstanden, wobei die unmittelbaren Auswirkungen eines Fehlers dieses Subsystems (gleichgültig ob es sich um einen Hardware oder Software oder Sensorfehler handelt) auf dieses Subsystem eingegrenzt sind [5, S.136]. Eine FCU ist *autark,* wenn diese FCU in der Lage ist, die geforderte Funktionalität ohne Bezugnahme auf eine weitere FCU zu erbringen.

Erfindungsgemäß besteht ein AEB System aus den zwei FCUs **110** und **120**. Die FCU **110** verfügt über Sensoren (z.B. Kamera, Radar) **111** und **112** zur Beobachtung der Umgebung des Fahrzeugs. Die FCU **120** verfügt über Sensoren **121** und **122**. Die Sensoren **111, 112, 121** und **122** werden zyklisch ausgelesen, wobei die Dauer eines Zyklus typischerweise 10 msec beträgt. In der FCU **110** übernimmt die Sensor Fusion Komponente **113** die Sensordaten und errechnet einen Stellwert für die Bremsaktuatoren, wobei der Stellwert *0* bedeutet, *nicht zu bremsen,* und der Stellwert *1* bedeutet, die *maximale Bremskraft zu aktivieren.* Analog berechnet die Sensor Fusion Komponente **123** den Stellwert der FCU **120**. Die beiden Stellwerte werden über die Datenleitungen **114** und **124** an die *intelligente Aktuatorsteuerung (AST)* **100** zur Steuerung der Bremsen ausgegeben. Die AST **100** wird auf einer self-checking Hardware exekutiert, um einen Hardwarefehler der AST **100** sofort erkennen zu können. Es wird angenommen, dass die relativ einfache Software der AST **100** frei von Entwurfsfehlern ist.

Im fehlerfreien Fall sind die beiden Stellwerte der FCUs **110** und **120** identisch und es ist daher unwesentlich, welcher der beiden Stellwerte von der AST **100** übernommen wird.

Im Fehlerfall werden die beiden Stellwerte der FCUs **110** und **120** unterschiedlich sein. Im Extremfall ermittelt in einem Zyklus FCU **110** den Wert *1 (Vollbremsung)* und FCU **120** den Wert *0 (nicht bremsen).* Da angenommen wird, dass nur eine FCU fehlerhaft ist, ist einer dieser beiden Werte richtig, der andere falsch. Es ist *nicht bekannt,* welcher Wert richtig und welcher Wert falsch ist. Wenn der richtige Wert *0 (nicht bremsen)* ist, dann kann die Wahl des falschen Wertes *1 - nicht notwendige spontane Vollbremsung -* zu einem Auffahrunfall durch das folgende Fahrzeug führen. Wenn hingegen der richtige Wert *1 (Vollbremsung)* ist, dann führt die Wahl des falschen Wertes *0* wahrscheinlich zu einem Unfall. Um das Risiko einer falschen Wahl zu begrenzen, wird vorgeschlagen, im *Fehlerfall* (ungleiche Stellwerte der beiden FCUs) durch einen gewichteten Mittelwertalgorithmus einen Stellwert zu errechnen, der aus Sicherheitsüberlegungen die Alternative *bremsen* stärker gewichtet als die Alternative *nicht bremsen.*

Weiter wird vorgeschlagen, dass im Fehlerfall (ungleiche Stellwerte) die intelligente AST eine Fehlermeldung im Diagnosespeicher des Fahrzeugs ablegt.

Erfindungsgemäß ermittelt die AST **100** aus den beiden Stellwerten der FCUs **110** und **120** durch Anwendung der folgenden Formel den Stellwert $B_i$ des gegenwärtigen Zyklus *i*

$$B_i = (g * B_{gross} + B_{klein})/(g+1)$$

wobei $B_{gross}$ der *größere* der beiden Stellwerte und $B_{klein}$ der *kleinere* der beiden Stellwerte der FCUs **110** und **120** ist. Die Variable g gibt an, mit welchem Gewicht der größere Stellwerte (*stärker bremsen*) zu berücksichtigen ist im Vergleich zum kleineren Stellwert (*weniger stark bremsen*).

Im folgenden Beispiel wird *g = 3* angenommen, d.h. in dem gewichteten Mittelwertalgorithmus hat der größere Stellwert ein dreimal so großes Gewicht wie der kleinere Stellwert. Durch die stärkere Gewichtung des größeren Stellwerts wird erreicht, dass das Fahrzeug im Fehlerfall *schnell* in einen sicheren Zustand (beispielsweise in einen abbremsenden oder abgebremsten Zustand oder Stillstand) geführt wird.

**Tab. 1:** Stellwert als Funktion von $B_{gross}$ und $B_{klein}$; *g=3*

| $B_{klein}$ / $B_{gross}$ | 1.0 | 0.8 | 0.6 | 0.4 | 0.2 | 0.0 |
|---|---|---|---|---|---|---|
| 1.0 | **1** | 0.95 | 0.9 | 0.85 | 0.80 | 0.75 |
| 0.8 | - | **0.8** | 0.75 | 0.70 | 0.65 | 0.60 |
| 0.6 | - | - | **0.6** | 0.55 | 0.50 | 0.45 |
| 0.4 | - | - | - | **0.4** | 0.35 | 0.3 |
| 0.2 | - | - | - | - | **0.2** | 0.15 |
| 0.0 | - | - | - | - | - | **0.0** |

Das Beispiel mit der Gewichtung *g = 3* zeigt, dass im betrachteten Extremfall, d.h. eine FCU verlangt *Vollbremsung,* die andere *nicht bremsen,* eine Bremskraft von 75% zur Anwendung gebracht wird. Aus der Tabelle 1 ist auch ersichtlich, dass im fehlerfreien Fall (Diagonale in Tab.l) keine Modifikation des Stellwerts erfolgt.

Zum Unterschied von Systemen der Analogtechnik sind in digitalen Systemen die Auswirkungen eines Fehlers auf das Resultat unvorhersehbar. Um eine extreme, durch einen Fehler hervorgerufene spontane Reaktion des PS (im obigen Beispiel das Kraftfahrzeug) weiter abzufedern, kann der Stellwert *Bi* im Zyklus *i* beim plötzlichen Auftreten einer großen Differenz der errechneten Stellwerten der beiden FCUs durch eine gewichtete Mittelwertbildung aus dem gegenwärtigen Stellwert und dem Stellwert des unmittelbar vorgelagerten Zyklus i-1 weiter korrigiert werden. Dazu wird vorgeschlagen, dass die AST **100** einen korrigierten Stellwert $B_{ikor}$ wie folgt berechnet:

$$B_{ikor} = (B_i + B_{i-1} * (B_{groß} - B_{klein}))/(1 + B_{groß} - B_{klein})$$

Wenn $(B_{groß} - B_{klein}) = 0$ (gleiche Stellwerte), dann *ist* $B_{ikor} = B_i$, d.h. es erfolgt keine Korrektur. Wenn hingegen $(B_{groß} - B_{klein}) = 1$ (*Extremfall*) dann ist $B_{ikor} = (B_i + B_{i-1})/2$, *d.h.* $B_{ikor}$ nimmt den Mittelwert der beiden letzten Zyklen an. Für alle anderen Werte *von* $(B_{groß} - B_{klein})$ liegt der Wert $B_{ikor}$ zwischen diesen beiden Grenzen. Diese Berechnung des korrigierten Stellwertes $B_{ikor}$ führt zur Abfederung einer spontanen Reaktion, die durch einen Fehler hervorgerufen wurde.

Das vorgeschlagene Verfahren kann in redundanten Systemen mit verhältnismäßig geringem Aufwand realisiert werden und führt zu einer signifikanten Erhöhung der Zuverlässigkeit und Sicherheit von autonomen Steuerungssystemen.

Zitierte Literatur:

[1] US Pat Appl 20090299713. Miller, P.J. et al. Method of Modelling the Effect of a Fault on the Behavior of a System. Published on Dec. 3, 2009.

[2] Österreichische Patentanmeldung A 200/2013 der FTS Computertechnik. *Vorrichtung und Verfahren zur autonomen Steuerung von Kraftfahrzeugen.* Eingereicht am 14.3.2013

[3] Littlewood, B. & L. Strigini, (1993). Validation of ultra-high dependability for software-based systems. Comm. ACM. Vol. 36(11). (pp. 69-80).

[4] NCAP Rating Group. EURO NCAP Rating Review 2012. Online at: http://www.eu-roncap.com

[5] Kopetz, H. Real-Time Systems, Design Principles for Distributed Embedded Applications. Springer Verlag. 2011.

**Patentansprüche**

1. Verfahren zur Risikobegrenzung von Fehlern in einem Steuerungssystem, insbesondere einem sicherheitsrelevanten Steuerungssystem, welches Steuerungssystem zwei diversitär redundante Fault-Containment Units (FCU) (110, 120) beinhaltet, wobei jede FCU (110, 120) einen Stellwert ermittelt, das Steuerungssystem weiterhin eine Aktuatorsteuerung (AST) (100) beinhaltet, die aus den von den FCUs (110, 120) ermittelten Stellwerten einen neuen Stellwert derart errechnet, dass bei abweichenden ermittelten Stellwerten der FCUs (110, 120) das zu steuernde Objekt in einen sicheren Zustand geführt wird,
**dadurch gekennzeichnet, dass** die *Aktuatorsteuerung (AST)* (100) aus den von zwei unabhängigen Fault-Containment-Units (FCU) (110, 120) mittels *diversitärer Redundanz* ermittelten zwei Stellwerten durch die Anwendung eines *gewichteten Mittelwertalgorithmus* einen neuen Stellwert derart errechnet, dass trotz des Auftretens eines Fehlers in einer der beiden FCUs (110, 120) ein mit dem Steuerungssystem zu steuerndes Objekt in einen sicheren Zustand geführt wird, und wobei
die Aktuatorsteuerung (100) auf einer self-checking Hardware ausgeführt wird.

2. Verfahren zur Risikobegrenzung von Fehlern in einem *Autonomic Emergency Braking* (AEB) System eines Fahrzeugs, welches AEB System zwei diversitär redundante Fault-Containment Units (FCU) (110, 120) beinhaltet, wobei jede FCU (110, 120) einen Stellwert für die Bremskraft ermittelt, das System weiterhin eine Aktuatorsteuerung (AST) (100) beinhaltet, die aus den von den FCUs (110, 120) ermittelten Stellwerten für die Bremskraft einen neuen Stellwert für die Bremskraft derart errechnet, dass bei abweichenden ermittelten Stellwerten der FCUs (110, 120) das zu steuernde Objekt in einen sicheren Zustand geführt wird,
**dadurch gekennzeichnet, dass** die *Aktuatorsteuerung (AST)* (100) aus den von den zwei unabhängigen Fault-Containment-Units (FCU) (110, 120) mittels *diversitärer Redundanz* ermittelten zwei Stellwerten für die Bremskraft durch die Anwendung eines *gewichteten Mittelwertalgorithmus,* der den Stellwert jener FCU (110, 120), die eine höhere Bremskraft vorgibt, um ein vorgegebenes Gewicht g stärker gewichtet als den Stellwert jener FCU (110, 120), die eine geringere Bremskraft vorgibt, einen neuen Stellwert für die Bremskraft errechnet und diesen neuen Stellwert für die Bremskraft in dem Fahrzeug zur Anwendung bringt, und wobei die Aktuatorsteuerung (100) auf einer self-checking Hardware ausgeführt wird.

3. Verfahren nach Anspruch 1 oder 2, **dadurch gekennzeichnet, dass** der im gegenwärtigen Zyklus ermittelte Stellwert durch die Bildung eines *weiteren gewichteten Mittelwerts* aus dem Stellwert des vergangenen Zyklus und dem ermittelten Stellwert im gegenwärtigen Zyklus derart korrigiert wird, dass die Gewichtung des Stellwerts im vergangenen Zyklus zunimmt, wenn die Differenz zwischen den beiden im gegenwärtigen Zyklus berechneten Stellwerten zunimmt.

4. Verfahren nach einem der Ansprüche 1 bis 3, **dadurch gekennzeichnet, dass** die Aktuatorsteuerung (100) bei dem Auftreten von ungleichen Stellwerten eine Fehlermeldung in einem Diagnosespeicher ablegt.

5. Steuerungssystem, insbesondere sicherheitsrelevantes Steuerungssystem, welches Steuerungssystem zwei diversitär redundante Fault-Containment Units (FCU) (110, 120) beinhaltet, wobei jede FCU (110, 120) einen Stellwert ermittelt, das Steuerungssystem weiterhin eine Aktuatorsteuerung (AST) (100) beinhaltet, die aus den von den FCUs (110, 120) ermittelten Stellwerten einen neuen Stellwert derart errechnet, dass bei abweichenden ermittelten Stellwerten der FCUs (110, 120) das zu steuernde Objekt in einen sicheren Zustand geführt wird, **dadurch gekennzeichnet, dass** jede der unabhängigen FCUs (110, 120) eine Anzahl von Sensoren (111, 112; 121, 122) und eine Sensor Fusion Komponente (113, 123) umfasst, wobei jede Sensor Fusion Komponente (113, 123) aus den Sensoren (111, 112; 121, 122) ihrer FCU (110, 120) einen Stellwert errechnet, und wobei die beiden FCUs (110, 120) mit einer Aktuatorsteuerung (100) verbunden sind, und wobei die Aktuatorsteuerung (100) mittels eines *gewichteten Mittelwertalgorithmus* einen neuen Stellwert derart errechnet, dass trotz des Auftretens eines Fehlers in einer der beiden FCUs (110, 120) das zu steuernde Objekt in einen sicheren Zustand geführt wird, und wobei die Aktuatorsteuerung (100) auf einer self-checking Hardware ausgeführt wird.

6. *Autonomie Emergency Braking* (AEB) System eines Fahrzeugs, welches AEB System zwei diversitär redundante Fault-Containment Units (FCU) (110, 120) beinhaltet, wobei jede FCU (110, 120) einen Stellwert für die Bremskraft ermittelt, das System weiterhin eine Aktuatorsteuerung (AST) (100) beinhaltet, die aus den von den FCUs (110, 120) ermittelten Stellwerten für die Bremskraft einen neuen Stellwert für die Bremskraft derart errechnet, dass bei abweichenden ermittelten Stellwerten der FCUs (110, 120) das zu steuernde Objekt in einen sicheren Zustand geführt wird, **dadurch gekennzeichnet, dass** die *Aktuatorsteuerung (AST)* (100) aus den von zwei unabhängigen Fault-Containment-Units (FCU) (110, 120) mittels *diversitärer Redundanz* ermittelten zwei Stellwerten für die Bremskraft durch die Anwendung eines *gewichteten Mittelwertalgorithmus,* der den Stellwert jener FCU (110, 120), die eine höhere Bremskraft vorgibt, um ein vorgegebenes Gewicht g stärker gewichtet als den Stellwert jener FCU (110, 120), die eine geringere Bremskraft vorgibt, einen neuen Stellwert für die Bremskraft errechnet und diesen neuen Stellwert für die Bremskraft in dem Fahrzeug zur Anwendung bringt, und wobei die Aktuatorsteuerung (100) auf einer self-checking Hardware ausgeführt wird.

7. System nach Anspruch 5 oder 6, **dadurch gekennzeichnet, dass** der im gegenwärtigen Zyklus ermittelte Stellwert durch die Bildung eines *weiteren gewichteten Mittelwerts* aus dem Stellwert des vergangenen Zyklus und dem ermittelten Stellwert im gegenwärtigen Zyklus derart korrigiert wird, dass die Gewichtung des Stellwerts im vergangenen Zyklus zunimmt, wenn die Differenz zwischen den beiden im gegenwärtigen Zyklus berechneten Stellwerten zunimmt.

8. System nach einem der Ansprüche 5 bis 7, **dadurch gekennzeichnet, dass** die Aktuatorsteuerung (100) bei dem Auftreten von ungleichen Stellwerten eine Fehlermeldung in einem Diagnosespeicher ablegt.

9. Kraftfahrzeug mit zumindest einem System nach einem der Ansprüche 5 bis 8.

## Claims

1. A method for limiting the risk of faults in a control system, in particular a safety-relevant control system, said control system containing two fault-containment units (FCU) (110, 120) with diverse redundancy, wherein each FCU (110, 120) determines a control value, the control system also containing an actuator controller (AST) (100), which computes a new control value from the control value determined by the FCUs (110, 120) in such a way that if the control values determined by the FCUs (110, 120) differ, the object being controlled is brought into a safe state, **characterized in that** from the two control values determined by two independent fault containment units (FCU) (110, 120) using diverse redundancy the actuator controller (AST) (100) computes a new control value by the application of a weighted-mean algorithm, in such a way that, in spite of the occurrence of a fault in one of the two FCUs (110, 120) an object to be controlled with the control system is brought into a safe state, and wherein the actuator controller (100) is executed on a self-checking hardware.

2. A method for limiting the risk of faults in an autonomic emergency braking (AEB) system of a vehicle, which AEB system contains two fault containment units (FCU) (110, 120) with diverse redundancy, wherein each FCU (110, 120) determines a control value for the braking force, the control system also containing an actuator controller (AST) (100) which computes a new control value for the braking force from the control values for the braking force determined by the FCUs (110, 120), in such a way that if the control values determined by the FCUs (110, 120) differ, the object being controlled is brought into a safe state, **characterized in that** from the two control values for the braking force determined by two independent fault containment units (FCU) (110, 120) with diverse redundancy, the actuator controller (AST) (100) applies a weighted-mean algorithm, which weights the control value of the FCU (110, 120) that specifies a higher braking force more strongly by a specified weight g than the control value of the FCU (110, 120) that specifies a lower braking force, to compute a new control value for the braking force and applies this new control value for the braking force in the vehicle, and wherein the actuator controller (100) is executed on a self-checking hardware.

**3.** The method according to claim 1 or 2,
**characterized in that** the control value calculated in the current cycle is corrected by forming a further weighted mean value from the control value of the previous cycle and the control value calculated in the current cycle, in such a way that the weighting of the control value in the previous cycle increases if the difference between the two control value calculated in the current cycle increases.

**4.** The method according to any one of claims 1 to 3,
**characterized in that** in the event of unequal control values occurring, the actuator controller (100) stores an error message in a diagnostic memory.

**5.** A control system, in particular a safety-relevant control system, containing two fault-containment units (FCU) (110, 120) with diverse redundancy, wherein each FCU (110, 120) determines a control value, said control system also containing an actuator controller (AST) (100), which computes a new control value from the control values determined by the FCUs (110, 120) in such a way that if the control values determined by the FCUs (110, 120) differ, the object being controlled is brought into a safe state,
**characterized in that** each of the independent FCUs (110, 120) comprises a number of sensors (111, 112; 121, 122) and a sensor fusion component (113, 123), wherein each sensor fusion component (113, 123) calculates a control value from the sensors (111, 112; 121, 122) of its FCU (110, 120), and wherein the two FCUs (110, 120) are connected to an actuator controller (100) and wherein the actuator controller (100) applies a weighted-mean algorithm to compute a new control value in such a way that, in spite of the occurrence of a fault in one of the two FCUs (110, 120) the object to be controlled with the control system is brought into a safe state, and wherein the actuator controller (100) is executed on a self-checking hardware.

**6.** An autonomic emergency braking (AEB) system of a vehicle, which AEB system contains two fault containment units (FCU) (110, 120) with diverse redundancy, wherein each FCU (110, 120) determines a control value for the braking force, the system also containing an actuator controller (AST) (100), which computes a new control value for the braking force from the control values for the braking force determined by the FCUs (110, 120), in such a way that if the control values determined by the FCUs (110, 120) differ, the object being controlled is brought into a safe state,
**characterized in that** from the two control values for the braking force determined by two independent fault containment units (FCU) (110, 120) using diverse redundancy, the actuator controller (AST) (100) applies a weighted-mean algorithm, which weights the control value of the FCU (110, 120) that specifies a higher braking force more strongly by a specified weight g than the control value of the FCU (110, 120) that specifies a lower braking force, to compute a new control value for the braking force and applies this new control variable for the braking force in the vehicle, and wherein the actuator controller (100) is executed on a self-checking hardware.

**7.** The system according to claim 5 or 6,
**characterized in that** the control value calculated in the current cycle is corrected by forming a further weighted mean value from the control value of the previous cycle and the control value calculated in the current cycle, in such a way that the weighting of the control value in the previous cycle increases if the difference between the two control values calculated in the current cycle increases.

**8.** The system according to any one of claims 5 to 7,
**characterized in that** in the event of unequal control values occurring, the actuator controller (100) stores an error message in a diagnostic memory.

**9.** A motor vehicle having at least one system according to any one of claims 5 to 8.

**Revendications**

**1.** Procédé de limitation des risques d'erreurs dans un système de commande, notamment un système de commande relatif à la sécurité, lequel système de commande contient deux Unités de Limitation d'Erreurs (ULE) (110, 120)

**EP 2 972 601 B1**

redondantes de façon diversifiée, sachant que chaque ULE (110, 120) détermine une valeur de réglage, le système de commande contient en plus une commande d'actionneur (AST) (100), qui calcule une nouvelle valeur de réglage à partir des valeurs de réglage déterminées par les ULE (110, 120) de telle sorte que pour des valeurs de réglage déterminées divergentes des ULE (110, 120), l'objet à commander est guidé dans un état sécurisé,

**caractérisé en ce que** la commande d'actionneur (AST) (100) calcule, à partir des deux valeurs de réglage déterminées par les deux Unités de Limitation d'Erreurs (ULE) (110, 120) indépendantes au moyen de la redondance diversitaire en utilisant un algorithme de moyenne pondéré, une nouvelle valeur de réglage de telle sorte que malgré l'apparition d'une erreur dans une des deux ULE (110, 120) un objet à commander avec le système de commande est guidé dans un état sécurisé, et

sachant que la commande d'actionneur (100) est exécutée sur un matériel d'autocontrôle.

2. Procédé de limitation des risques d'erreurs dans un système de Freinage d'Urgence Autonome (FUA) d'un véhicule à moteur, lequel système de FUA contient deux Unités de Limitation d'Erreur (ULE) (110, 120) redondantes de façon diversifiée, sachant que chaque ULE (110, 120) détermine une valeur de réglage pour la force de freinage, le système contient en plus une commande d'actionneur (AST) (100), qui calcule, à partir des valeurs de réglage déterminées par les ULE (110, 120) pour la force de freinage, une nouvelle valeur de réglage pour la force de freinage de telle sorte que pour des valeurs de réglage déterminées divergentes des ULE (110, 120), l'objet à commander est guidé dans un état sécurisé,

**caractérisé en ce que** la commande d'actionneur (AST) (100), calcule une nouvelle valeurs de réglage pour la force de freinage à partir des deux valeurs de réglage pour la force de freinage déterminées par les deux Unités de Limitation d'erreurs (ULE) (110, 120) indépendantes au moyen de la redondance diversitaire en utilisant un algorithme de moyenne pondéré, qui pondère la valeur de réglage de l'ULE (110, 120), qui prédéfinit une force de freinage plus élevée, d'un poids g prédéfini plus fortement que la valeur de réglage de l'ULE (110, 120), qui prédéfinit une force de freinage plus faible et met en oeuvre dans le véhicule cette nouvelle valeur de réglage pour la force de freinage et sachant que la commande d'actionneur (100) est exécutée sur un matériel d'autocontrôle.

3. Procédé selon la revendication 1 ou 2, **caractérisé en ce que** la valeur de réglage déterminée dans le cycle actuel est corrigée par la formation d'une autre moyenne pondérée à partir de la valeur de réglage du cycle écoulé et de la valeur de réglage déterminée dans le cycle actuel de telle sorte que la pondération de la valeur de réglage dans le cycle écoulé augmente, si la différence entre les deux valeurs de réglages calculées dans le cycle actuel augmente.

4. Procédé selon l'une quelconque des revendications 1 à 3, **caractérisé en ce que** la commande d'actionneur (100) dépose un message d'erreur dans une mémoire de diagnostic en cas d'apparition de valeurs de réglage inégales.

5. Système de commande, notamment système de commande relatif à la sécurité, lequel système de commande contient deux Unités de Limitation d'Erreurs (ULE) (110, 120) redondantes de façon diversifiée, sachant que chaque ULE (110, 120) détermine une valeur de réglage, le système de commande contient en plus une commande d'actionneur (AST) (100), qui calcule une nouvelle valeur de réglage à partir des valeurs de réglage déterminées par les ULE (110, 120) de telle sorte que pour des valeurs de réglage déterminées divergentes des ULE (110, 120), l'objet à commander est guidé dans un état sécurisé,

**caractérisé en ce que** chacune des ULE (110, 120) indépendantes contient un nombre de capteurs (111, 112 ; 121, 122) et un composant de fusion de capteurs (113, 123), sachant que chaque composant de fusion de capteurs (113, 123) calcule une valeur de réglage à partir des capteurs (111, 112 ; 121, 122) de leurs ULE (110, 120) et sachant que les deux ULE (110, 120) sont reliées à une commande d'actionneur (100) et la commande d'actionneur (100) calcule une nouvelle valeur de réglage au moyen d'un algorithme de moyenne pondéré de telle sorte que malgré l'apparition d'une erreur dans une des deux ULE (110, 120), l'objet à commander est guidé dans un état sécurisé et la commande d'actionneur (100) est exécutée sur un matériel d'autocontrôle.

6. Système de Freinage d'Urgence Autonome (FUA) d'un véhicule, lequel système de FUA contient deux Unités de Limitation d'Erreurs (ULE) (110, 120) redondants de façon diversifiée, sachant que chaque ULE (110, 120) détermine une valeur de réglage pour la force de freinage, le système contient en plus une commande d'actionneur (AST) (100), qui calcule une nouvelle valeur de réglage pour la force de freinage à partir des valeurs de réglage déterminées par les ULE (110, 120) pour la force de freinage de telle sorte que pour des valeurs de réglage déterminées divergentes des ULE (110, 120), l'objet à commander est guidé dans un état sécurisé

**caractérisé en ce que** la commande d'actionneur (AST) (100), calcule une nouvelle valeurs de réglage pour la force de freinage à partir des deux valeurs de réglage pour la force de freinage déterminées par les deux Unités de Limitation d'erreurs (ULE) (110, 120) indépendantes au moyen de la redondance diversitaire en utilisant un algorithme de moyenne pondéré, qui pondère la valeur de réglage de l'ULE (110, 120), qui prédéfinit une force de freinage plus élevée, d'un poids g prédéfini plus fortement que la valeur de réglage de l'ULE (110, 120), qui prédéfinit une force de freinage plus faible et met en oeuvre dans le véhicule cette nouvelle valeur de réglage pour la force de freinage et sachant que la commande d'actionneur (100) est exécutée sur un matériel d'autocontrôle.

**7.** Système selon la revendication 5 ou 6, **caractérisé en ce que** la valeur de réglage déterminée dans le cycle actuel est corrigée par la formation d'une autre moyenne pondérée à partir de la valeur de réglage du cycle écoulé et de la valeur de réglage déterminée dans le cycle actuel de telle sorte que la pondération de la valeur de réglage dans le cycle écoulé augmente, si la différence entre les deux valeurs de réglage calculées dans le cycle présent augmente.

**8.** Système selon l'une quelconque des revendications 5 à 7, **caractérisé en ce que** la commande d'actionneur (100) dépose un message d'erreur dans une mémoire de diagnostic en cas d'apparition de valeurs de réglage inégales.

**9.** Véhicule automobile avec au moins un système selon l'une quelconque des revendications 5 à 8.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6317675 B1
- DE 10015255 A1
- DE 102007060036 A1
- DE 10155119 A1
- US 20090299713 A
- AT 2002013 A

**In der Beschreibung aufgeführte Nicht-Patentliteratur**

- Organisation eine Roadmap [4] veröffentlicht, aus der hervorgeht. European New Car Assessment Program. Autonomous Emergency Braking (AEB), 2016
- **MILLER, P.J. et al.** *Method of Modelling the Effect of a Fault on the Behavior of a System,* 03. Dezember 2009
- **LITTLEWOOD, B. ; L. STRIGINI.** Validation of ultra-high dependability for software-based systems. *Comm. ACM.,* 1993, vol. 36 (11), 69-80
- EURO NCAP Rating Review. NCAP Rating Group, 2012
- Real-Time Systems. **KOPETZ, H.** Design Principles for Distributed Embedded Applications. Springer Verlag, 2011